# EUROPEAN PATENT SPECIFICATION

(11) **EP 2 039 085 B1**
(45) Date of publication and mention of the grant of the patent: **21.11.2012**
(21) Application number: 07809981.9
(22) Date of filing: 28.06.2007
(51) Int. Cl.: H04L 12/56

(54) **METHOD AND SYSTEM FOR NETWORK PATH DISCRIMINATION**
VERFAHREN UND SYSTEM ZUR NETZWERKPFADUNTERSCHEIDUNG
PROCÉDÉ ET SYSTÈME DE DISCRIMINATION DE CHEMIN DE RÉSEAU

(30) Priority: 30.06.2006 US 817408 P; 30.06.2006 US 817410 P
(43) Date of publication of application: 25.03.2009
(73) Proprietor: VONAGE HOLDINGS CORP., Holmdel, NJ 07733 (US)
(72) Inventor: PATEL, Hiren, Woodbridge, New Jersey 07095 (US); MARTINEZ, Jose, Perth Amboy, NJ 08861 (US)
(74) Representative: Jackson, Derek Charles
(86) International application number: PCT/US2007/015000
(87) International publication number: WO 2008/005274

(56) References cited:
- US-A1- 2004 136 324
- US-B1- 6 907 000
- US-B1- 6 934 258

## Description

### Field of the Invention

The present disclosure relates generally to systems and methods for selecting a path between two points on a network. In particular, the disclosure relates to media sessions over a network.

### Background

In Voice-over-IP (VoIP) implementations, audio and video problems due to network-related issues are common. This is especially true for enterprise and large residential VoIP implementations over problematic and complicated networks. Voice and video performance are visceral components of VoIP subscribers' consumer experience. In addition to increased complaints, these network issues spur customer churn regardless whether the VoIP service provider is at fault for the network issues.

Conventionally, approaches to solving this problem involve actively compensating for troublesome network paths as opposed to detecting and circumventing them. Some of these technologies include jitter buffers, compression codecs and codecs that predict the contents of lost packets. However, these solutions increase network overhead and also rely heavily on computing resources at the remote node to compensate for quality problems created by the network itself.

US-A-2004136324 discloses path optimization for routing of a communication session in a network having a plurality of core networks coupled to a plurality of access networks. Both a core network and an access network perform the path optimization by determining a plurality of possible paths to a plurality of target access points to form a target matrix, determining a corresponding route preference factor for each possible path of the target matrix, and selecting, from the target matrix, a possible path having an optimal route preference factor.

Accordingly, there is a need in industry to technological solutions providing an improved system and method for improving the quality of audio and video transmitted over a network.

### Summary

Various disclosed embodiments are generally directed to systems and methods for discriminating among network paths. According to one aspect of the present invention there is provided a method for discriminating among a plurality of network paths through a voice over internet protocol network at a remote node, comprising: evaluating, in the remote node, a first path including a first intermediate network point and a second path including a second intermediate network point from the plurality of network paths stored in the remote node; obtaining a first quality rating associated with the first path from the remote node to the first intermediate network point and a second quality rating for the second path from the remote node to the second intermediate network point; selecting a preferred path in the remote node from one of the first path or the second path according to the first quality rating and the second quality rating; and commencing a real-time communication over the preferred path from the remote node through the voice over internet protocol network to a destination remote node.

A computer program product for use with a remote device on a voice over internet protocol network is defined in claim 15 and a system for discriminating among a plurality of network paths through a voice over internet protocol network at a remote node of the voice over internet protocol network is defined in claim 16.

Various disclosed embodiments advantageously improve the quality of audio or video transmitted over a network. Further, various disclosed embodiments avoid scenarios which result in poor audio or video quality.

### Brief Description of the Drawings

Various aspects of the present disclosure will be or become apparent to one with skill in the art by reference to the following detailed description when considered in connection with the accompanying exemplary non-limiting embodiments, wherein:
Fig.1 illustrates a schematic diagram of a media communications device in communication with various network entities;
Fig. 2 is a flow chart outlining an exemplary disclosed method;
Fig. 3 is a flow chart outlining another exemplary disclosed method;
Fig. 4 is a schematic illustration of a media communications device in an exemplary network topology;
Fig. 5 is a schematic illustration of a media communications device in another exemplary network topology; and
Fig. 6 is a schematic illustration of an exemplary media communications device 601.

### Detailed Description

One aspect of the present disclosure includes a method for network path discrimination. Another aspect includes provisioning a media communications device with a list of network paths. Yet another aspect includes testing various network paths. An additional aspect includes utilizing selected network paths based on network topology. In a further aspect, preferred route information is received and used to discriminate among network paths.

In one embodiment, a media communications device determines the quality of several network paths and selects one or more paths over which to communicate media. The communicated media includes, but are not limited to, voice, audio, video, animated avatars, and other appropriate media combinations. In certain embodiments, the media communications device is a VoIP device in a VoIP network overlaying the public Internet, a private intranet, or a combination thereof. It is noted that, in connection less protocols such as IP, "network path" is generally a logical association of two points or nodes on the network which encompasses multiple and varied physical paths between the two points. For example, one of ordinary skill in the art will appreciate that each packet traveling over a common network path may travel unique physical routes between the two points.

In one example, a media communications device, such as a VoIP device, selects one or more of the available network paths for use during a communications session based on the determined quality of the paths. In at least one embodiment, quality of service is improved by discriminating among available network paths. Additional appropriate factors including, but not limited to, price (for example, when considering transmission of data over leased or access-controlled connections) and anticipated demand are optionally combined with quality to influence the selection of network path.

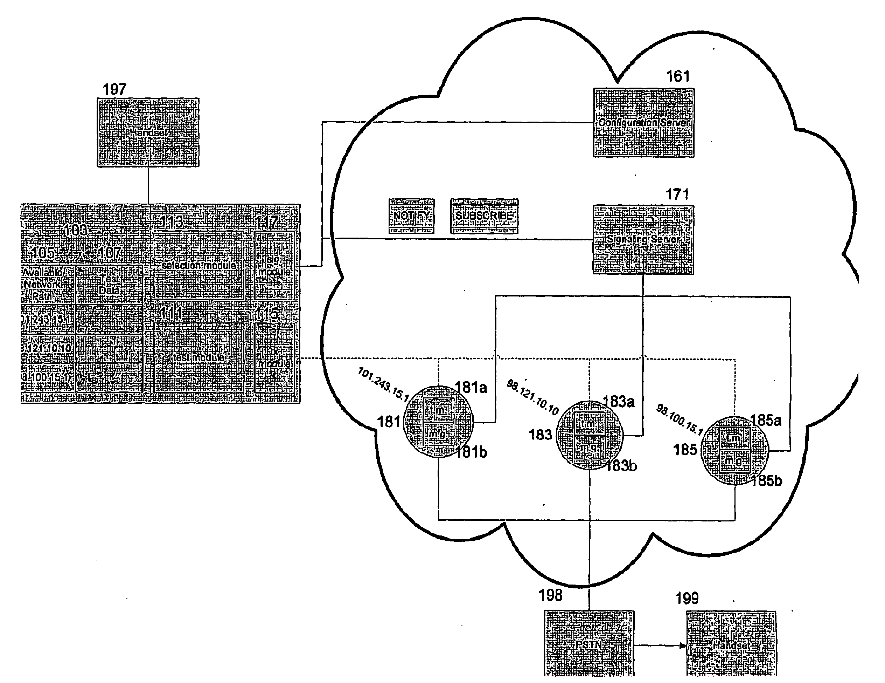

Fig. 1 illustrates a schematic diagram of a media communications device 101 in communication with various intermediate points and network entities. In one embodiment, the device 101 is attached locally to handset 197. The network connection from the device 101 optionally includes items such as a modem, router, and computer (not illustrated). In various embodiments, the device 101 communicates with various network entities including, but not limited to, a configuration server 161 and a signaling server 171. Further, media communications sessions are transmitted through intermediate points 181, 183, 185 such as gateways 181b, 183b, 185b. In one embodiment of the invention, the gateways are media gateways. In an alternate embodiment of the invention, the gateways are PSTN gateways. In another alternate embodiment the gateways are a combination of media and PSTN gateways. In one embodiment, the illustrated IP addresses are associated with a test module 181 a, 183a, 185a co-located with a media gateway at an intermediate point 181, 183, 185. Optionally, the IP addresses are associated with the gateways themselves 181 b, 183b, 185b. These IP addresses optionally define the network paths for the device 101 to complete a call or other communication to a destination 199, such as a handset, on the Public Switched Telephone Network (PSTN) 198. In other words, testing (as discussed below) is performed on one or more of the intermediate network points. Such points are identified as "testing points". In one embodiment of the invention, one or more of the testing points comprise the intermediate network points through which media communications is transmitted (i.e., a network path). In an alternate embodiment of the invention, the testing points do not necessarily or exclusively comprise the intermediate network points through which media communications is transmitted and instead only represent a group of selectable intermediate network points for the network path. In either embodiment, the network path is selected using the testing points. The destination 199 is also optionally a VoIP telephone adapter (TA) connected to the IP network and reachable through intermediate points 181, 183, 185.

In certain embodiments, the device 101 includes a configuration module 103, a test module 111, a selection module 113, a signaling module 117, and a transmission module 115. The configuration module 103 stores a list 105 of available network paths, represented here by IP addresses. In one embodiment, the IP addresses correspond to various intermediate points (e.g., intermediate point 181) through which media communications are transmitted (i.e., a network path). In an alternate embodiment of the invention, the IP addresses are testing points (e.g. intermediate points 183, 185). In such an embodiment, the IP addresses (or testing points) represent a group of selectable intermediate network points that may be used to form or otherwise select the network path (i.e., such IP addresses do not necessarily or exclusively comprise points through which media communications is transmitted (i.e., the network path). The test module 111 evaluates path quality by various methods, including but not limited to, sending a ping, utilizing trace-routes, sending a media test sample to one of the available intermediate points (now a testing point), or any of the additional test methods described elsewhere herein. The selection module 113 evaluates the quality ratings or criteria 107 and selects one or more network paths as a preferred path. Note that the testing can be performed in a "proactive" manner where predefined tests are constantly running and the appropriate selection being made. Alternately, the testing can be performed in a "passive" manner where the path selection is made by the quality ratings or criteria 107 of the media passing through a given testing point. Therefore there is a dynamic updating and a preferred path is selected based on data collected during a previous or concurrent communications session. In certain embodiments, the signaling module 117 optionally includes an encoding module (not illustrated) for encoding preferred network path information into signals transmitted to the signaling server 171. The transmission module 115 enables media communications to be commenced to a destination 199 through one of the intermediate network points 181,183, 185.

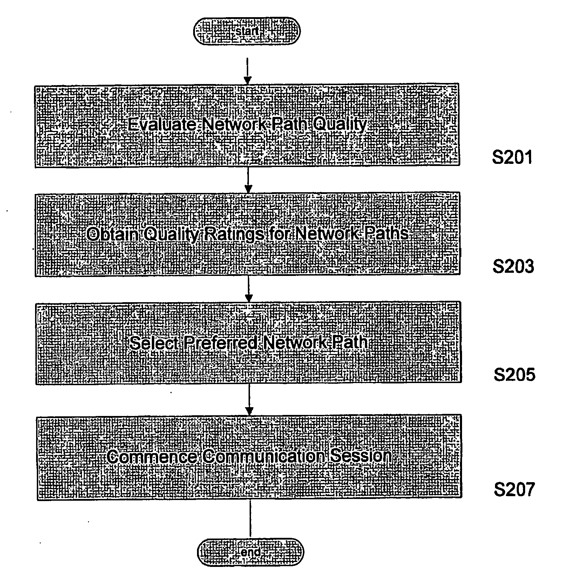

Fig. 2 is a flow chart outlining an exemplary disclosed method. In one embodiment, the device 101 evaluates the quality of various network paths S201. The device then obtains or calculates quality ratings for the tested network paths S203. Based on the quality ratings corresponding to the tested network paths, the device 101 selects one or more preferred network paths S205 for use during a media session S207 including, but not limited to, a voice or video call.

In various embodiments, provisioning the device 101 includes giving the device 101 a list of various network paths. In the case of an IP network, an IP end point cannot generally choose the network path that an IP packet will travel between itself and a single location. Accordingly, certain embodiments of the device 101 change the network path of its packets by changing the IP location with which the device 101 communicates. In one example, a list of network paths includes, but is not limited to, a list of IP addresses of intermediate network points with which the device 101 can exchange data traffic. This data traffic includes, for example, signaling packets or media packets.

Certain embodiments provision the device with the list of network paths through the same approach used for obtaining the device's configuration profile. In particular, devices 101 configured to work with VoIP Providers generally download their configuration profile over the Internet. The download may supplement network paths provided as part of the device's firmware. Various protocols can be used to download the configuration profile including, but not limited to, http, https, tftp, ftp, scp, and rcp. In certain embodiments, a setting is provided within the device's configuration profile includes a 'List of Network Paths,' this setting including a list of IP address locations with which the device 101 can exchange traffic or alternately use for testing and subsequent selection as described above.

Optionally, the system employs special signaling messages to retrieve and update the device's list of network paths, for example, by receiving a new listing of IP addresses. In an exemplary embodiment employing SIP (Session Initiation Protocol), SIP messages SUBSCRIBE and NOTIFY are used. SIP is described in Internet Engineering Task Force (IETF) RFC 3261, and the SUBSCRIBE and NOTIFY messages are described in IETF RFC 3265, the entireties of which are incorporated herein by reference. A NOTIFY message may be sent from an entity on the network to the device 101 to give the device path information. Alternatively or in combination, a SUBSCRIBE message may also be sent from the device 101 to a network entity as a mechanism for the device to communicate with the network or poll for information from the network. Suitable network entities enabling the provisioning process include a configuration server 161, a signaling server 171, or other dedicated network entity.

The list of available intermediate points is optionally installed in firmware or other memory and may be updated by downloading from network entities. The list of available intermediate points include, but are not limited to, proprietary network elements of a communication service provider and leased network elements.

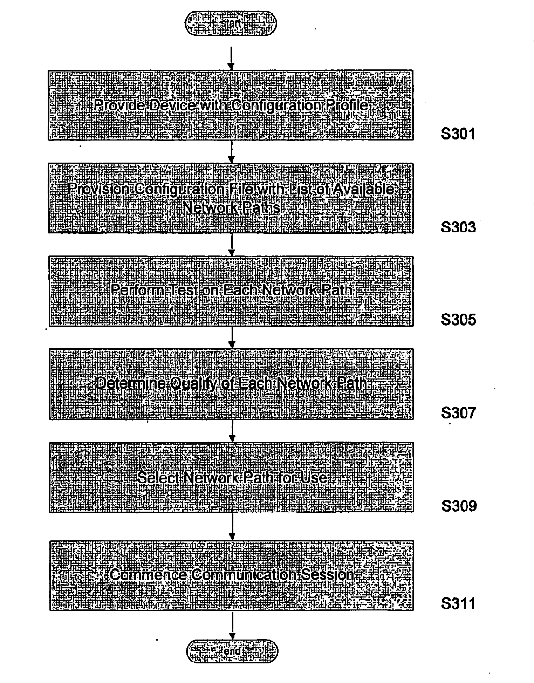

Fig. 3 is a flow chart outlining another exemplary disclosed method. In this embodiment, the device 101 downloads or otherwise receives a configuration profile S301. The configuration profile includes a list of network paths available to the device 101. The list of network paths is then stored on the device or otherwise updated S303. Based on this new list of paths, the device 101 performs tests on each network path S305. As discussed elsewhere, the device 101 optionally tests a subset of available network paths based on factors including, but not limited to, computational requirements, power, bandwidth, and time. These tests provide quality ratings for the network paths S307. The device 101 then selects one or more paths S309 for use, for example, when a communications session is commenced S311. Optionally, one or more paths are dynamically selected (for example, during the communication session).

Embodiments of the device 101 employ various methods to test the Quality of Service ("QoS") of a given network path. These determinations of quality occur passively, actively, or a combination thereof. The quality test assess various appropriate quality factors including, but not limited to, network latency, jitter, total packet count, delay, packet loss, latency, and mean opinion score (MOS). Data from the tests are optionally formulated according to appropriate algorithms including, but not limited to, MOS, PSQM, PESQ, and PAMS.

In various embodiments, the device 101 conducts tests of the listed IP locations (for example, corresponding to intermediate points) and then selects one or more of the IP locations based on appropriate quality ratings. Quality ratings or criteria include, but are not limited to, network latency, jitter, total packet count, delay, packet loss, latency, and mean opinion score (MOS). Generally, network latency represents the time taken for a packet to traverse a network between two points. Generally, packet loss occurs when a packet does not reach its intended destination (for example, when a buffer on an intermediate router overflows). Generally, jitter is the variation in delay that packets experience between two points on the network.

In various embodiments, the device 101 employs one or more quality testing methods or algorithms to pick the best, optimal, or preferred path. Suitable testing methods include, but are not limited to, ping ("Packet INternet Groper") and trace-route tests. Optionally, the device 101 performs multiple pings and/or trace-routes to obtain more accurate readings.

As described previously, suitable testing methods include active and passive monitoring of network path quality. For example, active (intrusive) monitoring includes periodically or continuously sending test "acoustic ping" packets corresponding to a short audio tone across the network to compare against a baseline or reference sample.

Another suitable testing method includes sending test media traffic to the different IP locations, such as those corresponding to the list of intermediate points. In certain embodiments, the IP locations are modified to allow for specialized testing such as test media traffic. For example, a testing server or module is added to an IP location at an intermediate point on the network to allow the IP location to receive and return a test sample from the device 101. Analysis is optionally performed at the intermediate point and results returned to the device 101. Suitable test samples include, but are not limited to, a prerecorded voice sample. In various embodiments, the device compares the test sample it sent with the sample or analyzed data received from the testing server to determine the quality of that particular network path.

Passive (nonintrusive) monitoring includes occasionally reviewing desired and actual packet Round Trip Times ("RTT"). Another suitable passive method includes E-Model ITU-T G.107-108 or "Estimated/Estimating" value, which is designed as a passive method to quantify the voice quality of VoIP. The result or output of the estimate is the R-Model or Result/Rate/Rated Model. R is defined as signal-to-noise ratio minus speech impairment minus delay impairment minus equipment impairment plus access (wireline/wireless) transmission factors (Rₒ = Iₛ-I_{d}-Iₑ+A). The value of R may be correlated to the ITU-T-P.830 Mean Opinion Score ("MOS"), an international standard. For example, MOS=5=R=100 or MOS of 4 (80% of 5) is an E-R of 80. The ITU-T P.800 standard uses a scale of 1 to 5 where above 4.0 is considered toll quality. E-R values range from 0 to 100.

Alternatively or in combination, selected embodiments employ the Perceptual Analysis Measurement System ("PAMS"), a proprietary intrusive speech system designed to measure delay with a measurement scale of 1-5. Another suitable testing algorithm includes Perceptual Speech Quality Measure ("PSQM"), an ITU-T P.861 standard scale of PESQ in which 0 (zero) represents toll-quality and 6.5 represents poor quality (there is no direct correlation to MOS/E/R). The PSQM algorithm (rule-of thumb) is affected by CODEC compression algorithms, packet loss, packet sequence errors, echo, jitter and other factors. Further, RTCP-XR-Real-Time Control Protocol extended Report is optionally employed. This is an extension to RFC3611 to report on jitter, total packet count, delay, packet loss and other factors.

Once one or more network paths are selected, utilization of the selected path(s) depends on the topology of the network. For example, VoIP network topology is generally based on either a centralized signaling server or multiple remote servers.

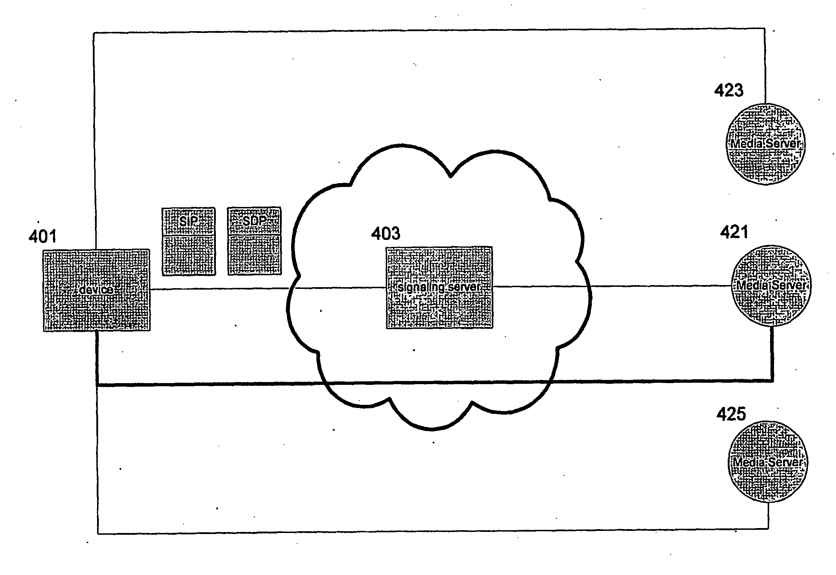

In a VoIP network based on a centralized signaling server such as that illustrated in Fig. 4, the device 101 communicates to one (or a group of) signaling servers 403 for initiating VoIP sessions. In embodiments functioning in this network topology, the device 101 does not necessarily change its signaling server 403 based on the outcome of the network path quality testing. However, once the device 101 selects a preferred network path for media communications, the device 101 communicates its selection to its signaling server(s) 403. The signaling server 403 ensures that the network path taken by the media for a call to the particular device 101 travels the selected network path by communicating with media server 421 corresponding to the preferred network path.

In an operational example, when initiating the VoIP session, the device 101 sends signaling to the signaling server 403. The device 101 optionally inserts preferred network path information into the signaling. This preferred path information may be simply an IP address or a domain name for a point-of-presence associated with a particular intermediate node 421. Upon receiving the signaling from the device 101, the signaling server will contact the media server 421 in the same IP location as was selected by the device 101 to setup the VoIP session. When the signaling is complete, the device 101 commences sending and receiving audio packets from the designated IP location 421.

If using a SIP signaling server 403, the selected IP location is optionally implemented by customizing the SIP headers or Session Description Protocol (SDP) information in the SIP signaling. SDP is described in IETF RFC 2327, the entirety of which is incorporated herein by reference. SIP allows for such customization so long as the receiving entity is appropriately configured to interpret the customized information. For example, the device 101 inserts a unique SIP header that has the IP location corresponding to the selected network path. The name of the new SIP header is optionally decided upon by the manufacturer or developer of the SIP server 403 or device 101.

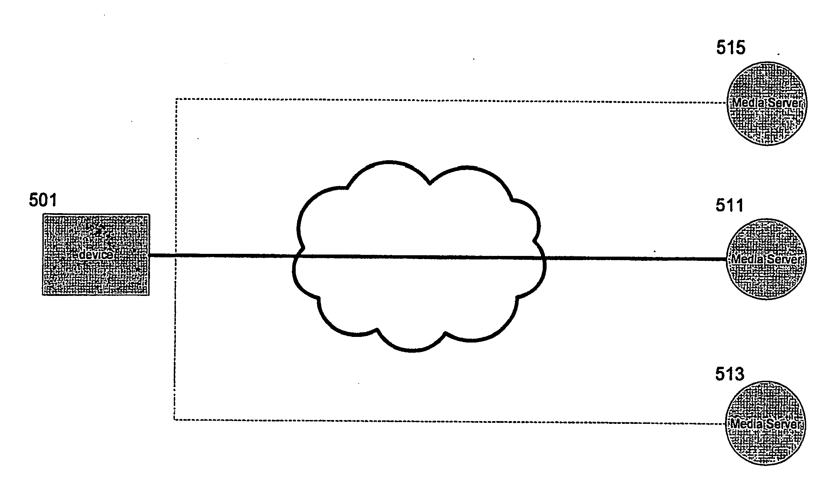

In a VoIP network topology based on multiple remote servers such as that illustrated at Fig. 5, the device 101 directly contacts a remote server 511 associated with the selected IP location. In an operational example, the device 101 sends VoIP signaling directly to the server 511 associated with the selected IP location. The association may be based on location, such as in a co-located point-of-presence ("POP") corresponding to the selected network path. The associated server 511 then processes the request and ensures that it, or another server related to the IP location, handles the audio to and from the device 101. In this scenario, unlike the centralized signaling VoIP network scenario described elsewhere, the device 101 generally does not have to insert the selected IP location in the signaling. Further, the device 101 is optionally provided a listing of remote servers 511, 513, 515 that are associated with the available IP locations making up the possible network paths.

In addition to receiving a new listing of IP addresses as described elsewhere, selected embodiments of the media communications device also receive preferred route information from a network source. The preferred route information includes, but is not limited to, route quality information as described herein for various network paths on a service provider's network. In certain embodiments, only a subset of the route quality information is sent to the media communications device 101 corresponding to the device's location on the network and the network paths available to that particular device 101. Suitable network sources include, but are not limited to, the configuration server 161, the signaling server 171, any one of the media servers 181, 183, 185, a server at a point-of-presence corresponding to one of the media servers, or another dedicated network entity.

The preferred route information is calculated by two or more points (including intermediate and terminal points) on the service provider network. In certain embodiments, each point or node includes a table of paths to the other network points. Pinging or polling other network points allows any enabled node to collect quality information and determine preferred network paths to other network nodes. This information is optionally analyzed and shared with associated pairs of network nodes to create network intelligence which is distributed over the network and updated autonomously. Optionally, additional or alternative paths are dynamically selected based on data collected during a media communications session.

Disclosed methods for avoiding network problems by selecting a higher quality network path provides several advantages. For example, sometimes a network path is so poor in quality that there is no economically or technologically feasible way to improve the audio quality over the troublesome path using the conventional techniques. For example, merely utilizing a jitter buffer increases audio or video delays in hopes of fixing or alleviating choppy audio. By selecting least congested network paths in accordance with various disclosed embodiments, media communication may be distributed over existing system resources such that no one resource becomes overwhelmed prematurely. This advantageous scalability enables service providers to introduce additional services or subscribers with reduced additional investment in their network infrastructure.

By way of example only, VoIP embodiments are described herein. However, the disclosed embodiments extend beyond voice communications and IP. For example, the embodiments extend to all media transmission types including video, audio, and combinations thereof over a variety of local or distributed network protocols. Further embodiments include point to point, point to multipoint, and multipoint to multipoint communications.

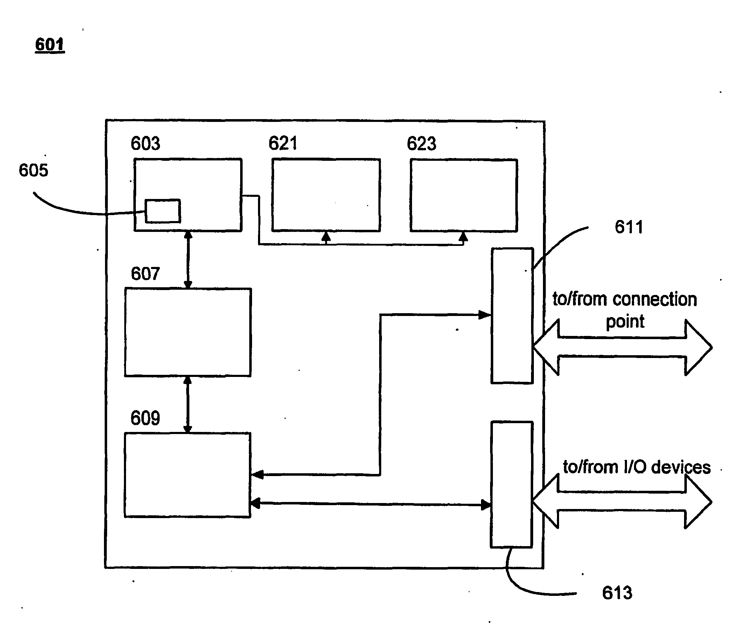

Fig. 6 is a schematic illustration of an exemplary media communications device 601. The device 601 may be used to facilitate the system and methods for providing network path discovery described above. The device 601 may be one of any form of a general purpose computer processor used in accessing an IP-based network such as a corporate intranet, the Internet or the like. The device 601 comprises a central processing unit (CPU) 607, a memory 603, and support circuits 609 for the CPU 607.

The device 601 optionally includes or communicates with a display 621 for communicating visual information to a customer. The device 601 optionally includes or communicates with a speaker 623 for communicating audio information to a customer. The device 601 is optionally integrated with a phone or a router. Alternatively, the device 601 is implemented using software running on a computer, thereby operating as a softphone similar to various embodiments described in U.S. App. Ser. 11/705,502 filed February 13, 2007, entitled "METHODAND SYSTEM FOR MULTI-MODAL COMMUNICATIONS", published as US-A-2008192732. In another alternative, the device 601 is a separate but complementary device with a form factor such as a V-PHONE (TM) Universal Serial Bus (USB) key manufactured and sold by Vonage of Holmdel, NJ for use with a computer to enable the computer to make VoIP calls.

The device 601 also includes provisions 611/613 for connecting the device 601 to the customer equipment and service provider agent equipment and the one or more input/output devices (not shown) for accessing the device 601 and/or performing ancillary or administrative functions related thereto. Note that the provisions 611/613 are shown as separate bus structures in Fig. 6; however, they may alternately be a single bus structure without degrading or otherwise changing the intended operability of the device 601 or embodiments generally. In embodiments where the device 601 is integrated with another device such as a phone, a router, or a computer, the device 601 optionally communicates with a display, speaker, or other input/output features of the other device through, for example, provisions 611/613.

Additionally, the device 601 and its operating components and programming as described in detail below are shown as a single entity; however, the device may also be one or more devices and programming modules interspersed around the system each carrying out a specific or dedicated portion of the diagnostic analysis as described earlier. By way of non-limiting example, a portion of the device 601 or software operations may occur at a Service Provider server and another a portion of the device 601 or software operations may occur at the service provider agent equipment. Other configurations of the device and device programming are known and understood by those skilled in the art.

The memory 603 is coupled to the CPU 607. The memory 603, or computer-readable medium, may be one or more of readily available memory such as random access memory (RAM), read only memory (ROM), floppy disk, hard disk, flash memory or any other form of digital storage, local or remote. The support circuits 609 are coupled to the CPU 607 for supporting the processor in a conventional manner. These circuits include cache, power supplies, clock circuits, input/output circuitry and subsystems, and the like. A software routine 605, when executed by the CPU 607, causes the device 601 to perform various processes disclosed herein and is generally stored in the memory 603. The software routine 605 may also be stored and/or executed by a second CPU (not shown) that is remotely located from the hardware being controlled by the CPU 607.

The software routine 605 is executed when a preferred method of diagnosing VoIP related communication faults is desired. The software routine 605, when executed by the CPU 607, transforms the general purpose computer into a specific purpose computer (device) 601 that controls the web-based application, suite of diagnostic tools or other similar actions. Although the processes disclosed herein are sometimes discussed as being implemented as a software routine, various ones of the method steps that are disclosed herewith may be performed in hardware as well as by the software device. As such, embodiments may be implemented in software as executed upon a computer system, in hardware as an application specific integrated circuit or other type of hardware implementation, or a combination of software and hardware. The software routine 605 is capable of being executed on computer operating systems including but not limited to Microsoft Windows 98, Microsoft Windows 2000/XP/Vista, Apple OS X and Linux. Similarly, the software routine 605 is capable of being performed using CPU architectures including, but not limited to IBM Power PC, Intel x86, Sun service provider agentRC, AMD, Transmeta, and Intel ARM.

## Claims

1. A method for discriminating among a plurality of network paths (S201) through a voice over internet protocol network at a remote node, comprising:
evaluating, in the remote node, a first path including a first intermediate network point (181) and a second path including a second intermediate network point (183) from the plurality of network paths stored in the remote node;
obtaining a first quality rating associated with the first path from the remote node to the first intermediate network point and a second quality rating for the second path from the remote node to the second intermediate network point;
selecting a preferred path (S205) in the remote node from one of the first path or the second path according to the first quality rating and the second quality rating; and
commencing a real-time communication over the preferred path from the remote node through the voice over internet protocol network to a destination remote node.

2. The method of claim 1, further comprising:
evaluating each one of the plurality of paths (S201);
obtaining quality ratings for each one of the plurality of paths (S203); and
selecting the preferred path (S205) from the plurality of paths according to the quality ratings; and
commencing a real-time communication over the preferred path.

3. The method of claim 1, further comprising:
receiving a list (105) of the plurality of network paths (S201) by receiving a SIP NOTIFY message.

4. The method of claim 1, further comprising:
transmitting a request for an updated list of the plurality of network paths by transmitting a SIP SUBSCRIBE message.

5. The method of claim 1, further comprising:
receiving preferred route information from a network source, wherein the step of selecting the preferred path (S205) includes analyzing the received preferred route information with the first and second quality ratings.

6. The method of claim 5, further comprising selecting a second preferred path during real-time communication based on the analyzed information.

7. The method of claim 1, wherein commencing a real-time communication includes
inserting preferred path information into signaling information, and transmitting the signaling information to a signaling server (171, 403).

8. The method of claim 7, wherein the signaling server (171, 403) contacts a media server (421) corresponding to the preferred path.

9. The method of claim 1, wherein commencing a real-time communication includes
transmitting signaling information to a point-of-presence corresponding to the preferred path (S205).

10. The method of claim 1, wherein evaluating includes one of a ping test, a trace-route test, a round-trip-time test, an E-model test, a perceptual analysis measurement system test, a perceptual speech quality measure test, and an RTCP-XR-Real-Time Control Protocol extended Report test.

11. The method of claim 1, wherein the first and second quality rating each include at least one of a network latency rating, a round-trip-time rating, a packet loss rating, a jitter rating, an R-model rating, a mean opinion score rating, a signal-to-noise ratio, a speech impairment rating, a delay impairment rating, an equipment impairment rating, an access transmission rating, a perceptual speech quality measure rating, a packet sequence error rating, an echo rating, and a total packet count.

12. The method of claim 1, further comprising:
receiving a list (105) of the plurality of network paths (S201).

13. The method of claim 1, wherein the step of evaluating the first path and the second path is passive.

14. The method of claim 1, wherein the step of evaluating the first path and the second path is active.

15. A computer program product for use with a remote device on a voice over internet protocol network, comprising:
a computer usable medium having computer readable program code modules embodied in said medium for discriminating among a plurality of network paths (S201) at a remote node;
a computer readable first program code module for causing a computer in the remote device to evaluate a first path including a first intermediate network point (181) and a second path including a second intermediate network point (183) from the plurality of network paths;
a computer readable second program code module for causing a computer to obtain a first quality rating associated with the first path from the remote node to the first intermediate network point and a second quality rating for the second path from the remote node to the second intermediate network point;
a computer readable third program code module for causing a computer in the remote device to select a preferred path (S205) from one of the first path or the second path according to the first quality rating and the second quality rating; and
a computer readable fourth program code module for causing a computer to commence real-time communication over the preferred path from the remote device through the voice over internet protocol network to a destination remote device.

16. A system for discriminating among a plurality of network paths (S201) through a voice over internet protocol network at a remote node of the voice over internet protocol network, comprising:
a media communications device (101,601) in the remote node, the media communications device including
a configuration module (103) including a list (105) of available intermediate points (181, 183, 185) on the network,
a testing module (111) adapted to test the quality of communication from the remote node to at least two of the intermediate points,
a selection module (113) adapted to select a preferred path (S205) including at least one of the available intermediate points according to the quality of communication from the remote node to the at least two intermediate points,
a signalling module (117) configured to transmit signalling information, and
a transmission module (115) adapted to commence real-time communications with the selected intermediate point corresponding to a preferred network path.

17. The system of claim 16, further comprising:
a configuration server (161) adapted to transmit the list (105) of available intermediate points (181, 183, 185) to the media communications device (101, 601).

18. The system of claim 16 or 17, wherein the media communications device (101, 601) further includes
an encoding module configured to embed path instructions corresponding to the preferred network path (S205) into the signaling information.

19. The system of claim 18, further comprising:
a signaling server (171, 403) configured to receive signaling and path instructions from the media communications device (101, 601); and
a media server (421) corresponding to the preferred network path (S205), the media server configured to communicate with the signaling server and receive real-time communications data from the media communications device.

20. The system of claim 17, further comprising:
a point-of-presence server corresponding to the preferred network path (S205), the point-of-presence server configured to receive signaling information directly from the media communications device (101, 601) and commence real-time communications with the media communications device.

## Patentansprüche

1. Verfahren zum Unterscheiden zwischen mehreren Netzwerkpfaden (S201) durch ein VOIP-(Voice over Internet Protocol)-Netz an einem Fernknoten, das Folgendes beinhaltet:
Beurteilen, in dem Fernknoten, eines ersten Pfades mit einem ersten Zwischennetzpunkt (181) und eines zweiten Pfades mit einem zweiten Zwischennetzpunkt (183) aus den mehreren im Fernknoten gespeicherten Netzwerkpfaden;
Einholen einer ersten Qualitätsbewertung in Verbindung mit dem ersten Pfad vom Fernknoten zum ersten Zwischennetzpunkt und einer zweiten Qualitätsbewertung für den zweiten Pfad vom Fernknoten zum zweiten Zwischennetzpunkt;
Auswählen eines bevorzugten Pfades (S205) im Fernknoten aus dem ersten und dem zweiten Netzwerkpfad gemäß der ersten und der zweiten Qualitätsbewertung; und
Beginnen einer Echtzeitkommunikation über den bevorzugten Pfad vom Fernknoten durch das VOIP-Netzwerk zu einem Zielfernknoten.

2. Verfahren nach Anspruch 1, das ferner Folgendes beinhaltet:
Beurteilen jedes einzelnen der mehreren Pfade (S201);
Einholen von Qualitätsbewertungen für jeden der mehreren Pfade (S203); und
Auswählen eines bevorzugten Pfades (S205) aus den mehreren Pfaden gemäß den Qualitätsbewertungen; und
Beginnen einer Echtzeitkommunikation über den bevorzugten Pfad.

3. Verfahren nach Anspruch 1, das ferner Folgendes beinhaltet:
Empfangen einer Liste (105) der mehreren Netzwerkpfade (S201) durch Empfangen einer SIP NOTIFY Nachricht.

4. Verfahren nach Anspruch 1, das ferner Folgendes beinhaltet:
Übertragen einer Anforderung für eine aktualisierte Liste der mehreren Netzwerkpfade durch Übertragen einer SIP SUBSCRIBE Nachricht.

5. Verfahren nach Anspruch 1, das ferner Folgendes beinhaltet:
Empfangen von Bevorzugte-Route-Informationen von einer Netzwerkquelle, wobei der Schritt des Auswählens des bevorzugten Pfades (S205) das Analysieren der empfangenen Bevorzugte-Route-Informationen mit der ersten und der zweiten Qualitätsbewertung beinhaltet.

6. Verfahren nach Anspruch 5, das ferner das Auswählen eines zweiten bevorzugten Pfades während einer Echtzeitkommunikation auf der Basis der analysierten Informationen beinhaltet.

7. Verfahren nach Anspruch 1, wobei das Beginnen einer Echtzeitkommunikation Folgendes beinhaltet:
Einführen von Bevorzugter-Pfad-Informationen in Signalisierungsinformationen, und
Übertragen der Signalisierungsinformationen zu einem Signalisierungsserver (171, 403).

8. Verfahren nach Anspruch 7, wobei der Signalisierungsserver (171, 403) einen dem bevorzugten Pfad entsprechenden Medienserver (421) kontaktiert.

9. Verfahren nach Anspruch 1, wobei das Beginnen einer Echtzeitkommunikation das Übertragen von Signalisierungsinformationen zu einem dem bevorzugten Pfad (S205) entsprechenden Point-of-Presence beinhaltet.

10. Verfahren nach Anspruch 1, wobei die Beurteilung einen Ping-Test, Traceroute-Test, Laufzeittest, E-Model-Test, Wahrnehmungsanalyse-Messsystemtest, Wahrnehmungs-Sprachqualitätsmesstest und einen RTCP-XR-Real-Time Control Protocol eXtended Report Test beinhaltet.

11. Verfahren nach Anspruch 1, wobei die erste und zweite Qualitätsbewertung jeweils wenigstens eine der folgenden Bewertungen beinhalten: Netzwerklatenz, Laufzeit, Paketverlust, Jitter, R-Model, MOS (Mean Opinion Score), Signal-Rausch-Verhältnis, Sprachstörung, Verzögerungsstörung, Gerätestörung, Zugangsübertragung, Wahrnehmungs-Sprachqualitätsmessung, Paketsequenzfehler, Echo und Gesamtpaketzahl.

12. Verfahren nach Anspruch 1, das ferner das Empfangen einer Liste (105) der mehreren Netzwerkpfade (S201) beinhaltet.

13. Verfahren nach Anspruch 1, wobei der Schritt des Beurteilens des ersten und des zweiten Pfades passiv ist.

14. Verfahren nach Anspruch 1, wobei der Schritt des Beurteilens des ersten und des zweiten Pfades aktiv ist.

15. Computerprogrammprodukt zur Verwendung mit einem Ferngerät auf einem VOIP-(Voice over Internet Protocol)-Netzwerk, das Folgendes umfasst:
ein rechnerlesbares Medium mit rechnerlesbaren Programmcode-Modulen, die in dem genannten Medium ausgestaltet sind, um zwischen mehreren Netzwerkpfaden (S201) an einem Fernknoten zu unterscheiden;
ein rechnerlesbares erstes Programmcode-Modul, um einen Computer in dem Ferngerät zu veranlassen, einen ersten Pfad mit einem ersten Zwischennetzwerkpunkt (181) zu beurteilen und einen zweiten Pfad mit einem zweiten Zwischennetzwerkpunkt (183) aus den mehreren Netzwerkpfaden zu beurteilen;
ein rechnerlesbares zweites Programmcode-Modul, um einen Computer zu veranlassen, eine erste Qualitätsbewertung in Verbindung mit dem ersten Pfad vom Fernknoten zum ersten Zwischennetzwerkpunkt und eine zweite Qualitätsbewertung für den zweiten Pfad vom Fernknoten zum zweiten Zwischennetzwerkpunkt einzuholen;
ein rechnerlesbares drittes Programmcode-Modul, um einen Computer im Ferngerät zu veranlassen, einen bevorzugten Pfad (S205) aus dem ersten und dem zweiten Pfad gemäß der ersten und der zweiten Qualitätsbewertung auszuwählen; und
ein rechnerlesbares viertes Programmcode-Modul, um einen Computer zu veranlassen, eine Echtzeitkommunikation über den bevorzugten Pfad vom Ferngerät durch das VOIP-Netzwerk zu einem Zielferngerät zu beginnen.

16. System zum Unterscheiden zwischen mehreren Netzwerkpfaden (S201) durch ein VOIP-Netz an einem Fernknoten des VOIP-Netzes, das Folgendes umfasst:
ein Medienkommunikationsgerät (101, 601) im Fernknoten, wobei das Medienkommunikationsgerät Folgendes umfasst:
ein Konfigurationsmodul (103), das eine Liste (105) von verfügbaren Zwischenpunkten (181, 183, 185) auf dem Netzwerk beinhaltet,
ein Prüfmodul (111) zum Prüfen der Qualität von Kommunikationen vom Fernknoten zu wenigstens zwei der Zwischenpunkte,
ein Auswahlmodul (113) zum Auswählen eines bevorzugten Pfades (S205) einschließlich wenigstens eines der verfügbaren Zwischenpunkte gemäß der Qualität von Kommunikationen vom Fernknoten zu den wenigstens zwei Zwischenpunkten,
ein Signalisierungsmodul (117) zum Übertragen von Signalisierungsinformationen, und
ein Übertragungsmodul (115) zum Beginnen von Echtzeitkommunikationen mit dem gewählten Zwischenpunkt entsprechend einem bevorzugten Netzwerkpfad.

17. System nach Anspruch 16, das ferner einen Konfigurationsserver (161) zum Übertragen der Liste (105) von verfügbaren Zwischenpunkten (181, 183, 185) zu dem Medienkommunikationsgerät (101, 601) umfasst.

18. System nach Anspruch 16 oder 17, wobei das Medienkommunikationsgerät (101, 601) ferner ein Codiermodul beinhaltet, das zum Einbetten von Pfadbefehlen, die dem bevorzugten Netzwerkpfad (S205) entsprechen, in die Signalisierungsinformationen konfiguriert ist.

19. System nach Anspruch 18, das ferner Folgendes umfasst:
einen Signalisierungsserver (171, 403) zum Empfangen von Signalisierungs- und Pfadbefehlen von dem Medienkommunikationsgerät (101, 601); und
einen Medienserver (421), der dem bevorzugten Netzwerkpfad (S205) entspricht, wobei der Medienserver zum Kommunizieren mit dem Signalisierungsserver und zum Empfangen von Echtzeitkommunikationsdaten von dem Medienkommunikationsgerät konfiguriert ist.

20. System nach Anspruch 17, das ferner einen Point-of-Presence-Server umfasst, der dem bevorzugten Netzwerkpfad (S205) entspricht, wobei der Point-of-Presence-Server zum Empfangen von Signalisierungsinformationen direkt von dem Medienkommunikationsgerät (101, 601) und zum Beginnen von Echtzeitkommunikationen mit dem Medienkommunikationsgerät konfiguriert ist.

## Revendications

1. Procédé de discrimination entre une pluralité de chemins de réseau (S201) sur un réseau de voix sur protocole Internet à un noeud distant, comprenant :
l'évaluation, dans le noeud distant, d'un premier chemin comprenant un premier point de réseau intermédiaire (181) et d'un deuxième chemin comprenant un deuxième point de réseau intermédiaire (183) dans la pluralité de chemins de réseau enregistrés dans le noeud distant ;
l'obtention d'une première note de qualité associée avec le premier chemin allant du noeud distant au premier point de réseau intermédiaire et d'une deuxième note de qualité pour le deuxième chemin du noeud distant au deuxième point de réseau intermédiaire ;
la sélection d'un chemin préféré (S205) dans le noeud distant venant de l'un du premier chemin ou du deuxième chemin selon la première note de qualité et la deuxième note de qualité ; et
le commencement d'une communication en temps réel sur le chemin préféré du noeud distant sur le réseau de voix sur protocole Internet à un noeud distant de destination.

2. Procédé selon la revendication 1, comprenant en outre :
l'évaluation de chacun d'une pluralité de chemins (S201) ;
l'obtention de notes de qualité pour chacun de la pluralité de chemins (S203) ; et
la sélection du chemin préféré (S205) dans la pluralité de chemins selon les notes de qualité ; et
le commencement d'une communication en temps réel sur le chemin préféré.

3. Procédé selon la revendication 1, comprenant en outre :
la réception d'une liste (105) de la pluralité de chemins de réseau (S201) en recevant un message NOTIFICATION SIP.

4. Procédé selon la revendication 1, comprenant en outre :
la transmission d'une demande de liste mise à jour de la puralité de chemins de réseau en envoyant un message ABONNEMENT SIP.

5. Procédé selon la revendication 1, comprenant en outre :
la réception d'informations sur le parcours préféré à partir d'une source de réseau, l'étape de sélection du chemin préféré (S205) comprenant l'analyse des informations reçues sur le parcours préféré ayant les première et deuxième notes de qualité.

6. Procédé selon la revendication 5, comprenant en outre la sélection d'un deuxième chemin préféré pendant la communication en temps réel sur la base des informations analysées.

7. Procédé selon la revendication 1, dans lequel le commencement d'une communication en temps réel comprend
l'insertion d'informations sur le chemin préféré dans les informations de signalisation, et
la transmission des informations de signalisation à un serveur de signalisation (171, 403).

8. Procédé selon la revendication 7, dans lequel le serveur de signalisation (171, 403) contacte un serveur de média (421) correspondant au chemin préféré.

9. Procédé selon la revendication 1, dans lequel le commencement d'une communication en temps réel comprend :
la transmission des informations de signalisation à un point de présence correspondant au chemin préféré (S205).

10. Procédé selon la revendication 1, dans lequel l'évaluation comprend l'un des tests suivants: test par ping, test de trace-parcours, test de temps d'aller-retour, test modèle E, test de système de mesure d'analyse perceptuelle, test de mesure de qualité de parole perceptuelle, et test de rapport RTCP-XR (protocole de commande de transport en temps réel - étendu).

11. Procédé selon la revendication 1, dans lequel les première et deuxième notes de qualité comprennent chacune au moins l'une des notes suivantes : note de latence de réseau, note de temps d'aller-retour, note de perte de paquets, note de gigue, note de modèle R, note d'opinion moyenne, rapport signal-bruit, note de trouble de la parole, note de dégradation par retard, note de dégradation de l'équipement, note de transmission d'accès, note de mesure de qualité de la parole perceptuelle, note d'erreur de séquence de paquets, note d'écho et nombre de paquets total.

12. Procédé selon la revendication 1, comprenant en outre :
la réception d'une liste (105) de la pluralité de chemins de réseau (S201).

13. Procédé selon la revendication 1, dans lequel l'étape d'évaluation du premier chemin et du deuxième chemin est passive.

14. Procédé selon la revendication 1, dans lequel l'étape d'évaluation du premier chemin et du deuxième chemin est active.

15. Produit informatique devant être utilisé avec un dispositif distant sur un réseau de voix sur protocole Internet, comprenant :
un support utilisable par ordinateur dans lequel sont incorporés des modules de code programme lisibles par ordinateur pour discriminer entre une pluralité de chemins de réseau (S201) à un noeud distant ;
un premier module de code programme lisible par ordinateur pour faire évaluer par un ordinateur dans le dispositif distant un premier chemin comprenant un premier point de réseau intermédiaire (181) et un deuxième chemin comprenant un deuxième point de réseau intermédiaire (183) de la pluralité de chemins de réseau ;
un deuxième module de code programme lisible par ordinateur pour faire obtenir par un ordinateur une première note de qualité associée avec le premier chemin du noeud distant au premier point de réseau intermédiaire et une deuxième note de qualité pour le deuxième chemin du noeud distant au deuxième point de réseau intermédiaire ;
un troisième module de code programme lisible par ordinateur pour faire sélectionner par un ordinateur dans le dispositif distant un chemin préféré (S205) entre le premier chemin et le deuxième chemin selon la première note de qualité et la deuxième note de qualité ; et
un quatrième module de code programme lisible par ordinateur pour faire commencer par un ordinateur une communication en temps réel sur le chemin préféré du dispositif distant, sur le réseau de voix sur protocole Internet, à un dispositif distant de destination.

16. Système pour discriminer entre une pluralité de chemins de réseau (S201) sur un réseau de voix sur protocole Internet à un noeud distant du réseau de voix sur protocole Internet, comprenant :
un dispositif de communications de média (101, 601) dans le noeud distant, le dispositif de communication de média comprenant :
un module de configuration (103) comprenant une liste (105) de points intermédiaires disponibles (181, 183, 185) sur le réseau,
un module de test (111) adapté pour tester la qualité de la communication du noeud distant à au moins deux des points intermédiaires,
un module de sélection (113) adapté pour sélectionner un chemin préféré (S205) comprenant au moins l'un des points intermédiaires disponibles selon la qualité de communication du noeud distant aux deux points intermédiaires ou plus,
un module de signalisation (117) configuré pour transmettre les informations de signalisation, et
un module de transmission (115) adapté pour commencer les communications en temps réel avec le point intermédiaire sélectionné correspondant à un chemin de réseau préféré.

17. Système selon la revendication 16, comprenant en outre :
un serveur de configuration (161) adapté pour transmettre la liste (105) de points intermédiaires disponibles (181, 183, 185) au dispositif de communications de média (101, 601).

18. Système selon la revendication 16 ou 17, dans lequel le dispositif de communications de média (101, 601) comprend en outre
un module de codage configuré pour incorporer les instructions sur le chemin correspondant au chemin de réseau préféré (S205) dans les informations de signalisation.

19. Système selon la revendication 18, comprenant en outre :
un serveur de signalisation (171, 403) configuré pour recevoir des instructions de signalisation et de chemin du dispositif de communications de média (101, 601) ; et
un serveur de média (421) correspondant au chemin de réseau préféré (S205), le serveur de média étant configuré pour communiquer avec le serveur de signalisation et recevoir des données de communications en temps réel du dispositif de communications de média.

20. Système selon la revendication 17, comprenant en outre :
un serveur de point de présence correspondant au chemin de réseau préféré (S205), le serveur de point de présence étant configuré pour recevoir les informations de signalisation directement du dispositif de communications de média (101, 601) et commencer des communications en temps réel avec le dispositif de communications de média.
